# EUROPEAN PATENT APPLICATION

(11) **EP 3 211 852 A1**
(43) Date of publication of application: **30.08.2017**
(21) Application number: 15863662.1
(22) Date of filing: 12.03.2015
(51) Int. Cl.: H04L 29/06

(54) **SSH PROTOCOL-BASED SESSION PARSING METHOD AND SYSTEM**

(30) Priority: 25.11.2014 CN 201410690049
(71) Applicant: Institute of Acoustics, Chinese Academy of Sciences, Haidian District Beijing 100190 (CN); Beijing Intellix Technologies Co. Ltd., Beijing 100190 (CN)
(72) Inventor: SONG, Lei, Beijing 100190 (CN); WU, Jinghong, Beijing 100190 (CN); ZHENG, Yanwei, Beijing 100190 (CN); YE, Xiaozhou, Beijing 100190 (CN); CAO, Zuowei, Beijing 100190 (CN)
(74) Representative: Hanna Moore + Curley
(86) International application number: PCT/CN2015/074091
(87) International publication number: WO 2016/082371

(57) **Abstract**

Provided are a distributed node intra-group task scheduling method and system. The method comprises: step 101) collecting resource state information and history service information about each node in a group; step 102) receiving a service request command and parsing the request command to obtain a request task; step 103) according to the resource state information and history service information about each node, calculating the resource utilization rate increment after each node in the group loads a task and the occupation condition of each kind of resource in the group; and according to a principle of making the resource utilization rate increment of each node in the group as low as possible and the occupation of each kind of resource in the group as balanced as possible, selecting service execution nodes in the group, and providing the request task by the selected service execution nodes.

## Description

### TECHNICAL FIELD

The present invention relates to the field of computer network technology, and in particular to a SSH protocol-based session parsing method and system.

### BACKGROUND OF THE INVENTION

Protocols are means for various computer intra-application and inter-application communications, and protocol parsing has become an indispensable technology in network applications. Both communication parties package communication content in a protocol for transmission. Some protocols further encrypt transmitted data. SSH, for example, is a protocol for secure remote login and other secure network services over an unsecured network, and data transmitted via SSH channel is encrypted data.

In business systems of some enterprises or institutions, login and operation behaviors at the user end need to be monitored and recorded for business auditing. Usually monitoring user behaviors is implemented by adding a man-in-the-middle between a serving end and a client. For the SSH protocol, all data packets intercepted by the man-in-the-middle are encrypted data and first need to be decrypted into plaintext data packets which are then parsed. After that, parsed logs are generated. Auditors can reproduce all operation behaviors at the client from parsed logs, so that safety guarantee is provided for business systems of these enterprises or institutions. An objective of auditing is to monitor client behaviors under the premise that the quality of normal communication between the client and the server is not impaired. The processing efficiency of the man-in-the-middle will affect the quality of communication between the client and the serving end, and protocol parsing is one of important steps for man-in-the-middle processing, which imposes a higher requirement on the efficiency of protocol parsing.

So far there is little SSH protocol-based parsing. Usually existing protocol parsing technologies are only applicable to some preset specific scenarios and are thus poor in scalability. In addition, current methods are mainly based on purely soft parsing, and the concurrency performance is yet to be improved.

### SUMMARY OF THE INVENTION

An objective of the present invention is to propose a SSH protocol-based session parsing method and system so as to provide auditing support for business systems of some enterprises or institutions.

To achieve the foregoing objective, the present invention provides a SSH protocol-based session parsing method, comprising:
step 101) receiving a SSH protocol-based session data packet and respectively preprocessing the received data packet as follows:
   when one data packet contains several complete messages, extracting each complete message from the data packet;
   when the data packet contains an incomplete message, firstly caching the incomplete message contained in the current data packet, then receiving a subsequent data packet, and finally splicing a message contained in the subsequent data packet with content of the cached message until a complete message is spliced;
step 102) extracting a content associated with log generation from each obtained complete message, packaging the content associated with the log according to a set format, and then obtaining a parsed log and finishing the session parsing.

Optionally, after step 102), the method further comprises:
step 103) sending the generated parsed log to a log server in a streaming send mode;
   wherein the streaming sending mode is: writing the generated parsed log into a log cache, and when a length of a cached log reaches a set sending length, immediately sending information on the parsed log to the log server.

Optionally, step 101) further comprises:
step 101-1) after receiving a SSH protocol-based session data packet, firstly checking whether there is a cached data packet in a cache area, and if there is no cached data packet, then directly calculating a length of a first message in the received data packet; if there is a cached data packet, this means the current data packet is a continuation of content contained in the cached data packet, then first copying content of the current data packet to the cached data packet, then splicing an incomplete message and calculating the length of a first message in the current cached data packet;
step 101-2) comparing the calculated length of the first message with the length of the received data packet, and respectively performing the following steps in view of different situations of a judgment result:
   step 101-2-1) if the length of the first message is equal to the length of the received data packet, this means content of the current data packet is a complete message, then directly parsing the message;
   step 101-2-2) if the length of the first message is less than the length of the data packet, then splitting the data packet, i.e. extracting complete messages from the data packet and characterizing a complete message with a message head address and a message length;
   step 101-2-3) if the length of the first message is greater than the length of the data packet, then caching the data packet, further splicing several data packets, finally obtaining a complete message and parsing the obtained complete message.

Specifically, step 102) comprises:
step 102-1) identifying a message type according to message code, judging according to the identified type whether the message is associated with log generation, and if the message is irrelevant to log generation, then directly discarding the message; otherwise respectively processing various types of messages associated with log generation as follows:
   for a version negotiation message, obtaining and caching a protocol version number in the message;
   for a user authentication request message, extracting a user name from the message and caching the same;
   for a channel request message, obtaining and caching a requested channel type;
   for a message transmitted in a channel, judging from a message direction whether the message belongs to requests or responses, and caching the message direction; wherein if the message direction is from a client to a server, then the message is a request message, otherwise a response message;
step 102-2) generating a parsed log based on cached content and a response data packet, the generated log comprising: TCP/IP tetrad, session ID, user name logging into the session, login time, request command of the client, request start time, response data returned from a serving end to the client, and response end time;
   wherein, the request command of the client and the response data returned from the serving end to the client can occur repetitively in one session life cycle, and each parsed log as generated only contains one request command of the client and one response of the server end, i.e. requests and responses of different parsed logs are independent of each other;
   the TCP/IP tetrad, session ID, user name logging into the session and login time remain unchanged in one session life cycle.

Further optionally, each input of the client is sent to the server in the form of a message, and a result of input is presented at a terminal via an echoed message returned from the serving end; by identifying escape characters in the echoed message, the position of a cursor is accurately controlled, the request command is restored with reference to request characters carried in the message, and when detecting the client request ends, the restored request command is immediately written into the log cache. Data which is returned from the server to the client only after the end of the user's request is used as response data, the response data is written into the log cache in order, and when the length of a cached log segment reaches a set sending length, the log segment is sent immediately. For sending of the last log segment, it may be driven by a next request or driven by a timer.

In addition, the present invention further provides a SSH protocol-based session parsing system, comprising:
a packet processing module used for receiving a SSH protocol-based session data packet and respectively preprocessing the received data packet as follows:
   when one data packet contains several complete messages, extracting each complete message from the data packet;
   when the data packet contains an incomplete message, firstly caching the incomplete message contained in the current data packet, then receiving a subsequent data packet, and finally splicing a message contained in the subsequent data packet with content of the cached message until a complete message is spliced;
   a parsing module used for extracting a content associated with log generation from each obtained complete message, packaging the content associated with the log according to a set format, and then obtaining a parsed log and finishing the session parsing.

Optionally, the system further comprises:
a log sending module used for sending the generated parsed log to a log server in a streaming send mode; wherein the streaming send mode is: writing the generated parsed log into a log cache, and when a length of a cached log reaches a set sending length, immediately sending information on the parsed log to the log server.

Compared with the prior art, the present invention has advantages as follows:
simplifying the flow -- by processing a data packet, complete messages are obtained, which makes the parsing flow simpler and more reliable.
saving a cache -- by parsing a complete message, the memory space is saved while simplifying the processing flow; in addition, logs are transmitted using a streaming send mode, the cache space is saved significantly, and only by applying for a small cache space for each parsing task, needs of log generation and sending can be satisfied.

### BRIEF DESCRIPTION OF THE DRAWINGS

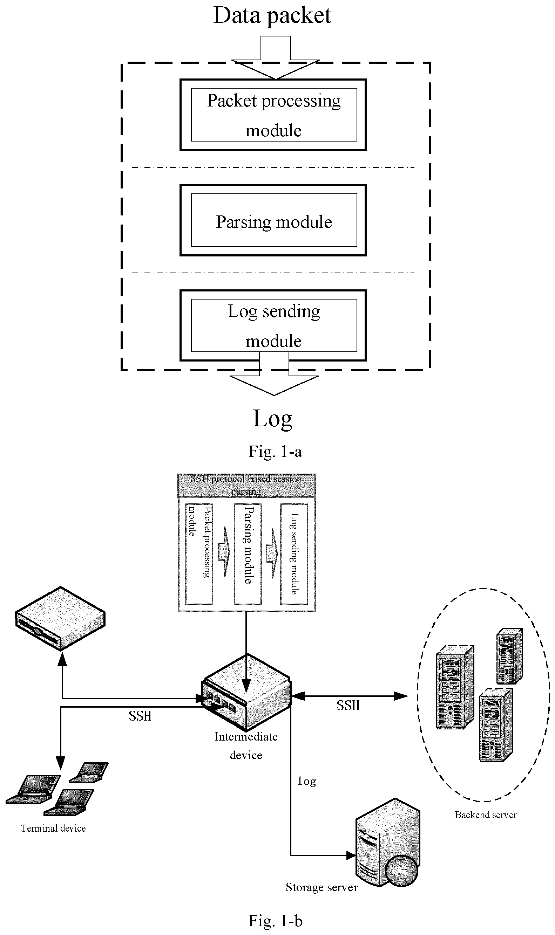

Fig. 1-a is a schematic view of a logical structure of various modules of a parsing system provided by the present invention;
Fig. 1-b is a schematic view of an application scenario of a parsing system of the present invention;
Fig. 2 is a processing flowchart of a packet processing module in a method of the present invention;
Fig. 3 is a flowchart of response parsing in a method of the present invention; and
Fig. 4 is a schematic view of the format of a log segment streaming-sent in a method of the present invention.

### DETAILED DESCRIPTION OF THE INVENTION

Detailed illustration is presented below to the present invention with reference to the accompanying drawings and preferred embodiments.

### Example 1

To implement the foregoing method, the present invention provides a parsing system as shown in Figs. 1-a and 1-b. Fig. 1-a is a schematic view of a logical structure of three modules, and Fig. 1-b is a schematic view of an application scenario of the parsing system. The three modules involved in the present invention comprise: a packet processing module, a parsing module and a log sending module.

The packet processing module is used for processing a received data packet that is in a many-to-many mapping relation with a message. That is, one data packet might contain one or more messages, or one message might exist in multiple data packets. If such kind of data packets are parsed directly, then message contents are likely to be missed, which leads to incomplete parsing. Therefore, before parsing, data packets need to be processed first. For a data packet containing multiple messages, messages are extracted from the packet successively and one complete message is extracted at a time. When the packet contains an incomplete message, the incomplete message is cached. After receiving a subsequent data packet, new data is spliced with content of the cached message until a complete message is spliced which is then submitted to the parsing module for processing. After processing by this module, the processing flow of the parsing module is greatly simplified, and the parsing efficiency is increased.

The parsing module, the core module of the method, is responsible for identifying, analyzing, extracting and processing content associated with log generation from complete SSH messages, and finally generating a parsed log that conforms to a set format. The input to the parsing module is one complete SSH message, whose format is as below:
Uint32 packet_length
Byte padding_length
Byte[n1] payload #n1 =packet_length-padding_length-1
Byte[n2] random padding #n2 = padding_length
Byte[m]mac #m = mac_length; (optional)

After receiving the message, the parsing module first obtains a message code from payload, a nd the message code is a unique identification of message type. From the message code it can be lear ned to which stage of the SSH protocol a current message corresponds, and then SSH messages in di fferent stages are analyzed and processed differently. For example, SSH_MSG_USERAUTH_REQ UEST corresponds to a user authentication request stage of the SSH protocol, so the method parsing a message in this stage is mainly to obtain a user name requesting authentication. Since the packet pr ocessing module does not identify a data packet, the packet processing module processes all data pac kets in the SSH session process, and messages received by the parsing module necessarily contain se veral messages irrelevant to the parsing process. For such messages, the parsing module directly disc ard them without any processing.

The log sending module is mainly responsible for sending a generated log to a log server. Traditional practice is to send one log after completion of log generation. However, the method adopts a streaming send mode to transmit logs. The parsing module generates a log when parsing it. The generated log is written into a log cache, and when the length of the cached log reaches a sending length, the log is sent out immediately, without a need to wait for the generation of a complete log to finish. The sending module monitors logs and processes the logs in time, which increases the efficiency of log transmission to some extent and meantime saves the cache space significantly.

Optionally, the above-mentioned packet processing module further includes:
a first processing sub-module used for, after receiving a SSH protocol-based data packet, first checking whether there is a cached data packet in a cache area or not, if there is no cached data packet, then directly calculating the length of a first message in the received data packet and driving a second processing sub-module; if there is a cached data packet in the cache, this means the current data packet is a continuation of content contained in the cached data packet, directly driving a third processing unit;
a second processing sub-module used for comparing the calculated length of the first message with the length of the received data packet, and starting the following units in view of different situations of a judgment result:
   a first processing unit used for, if the length of the first message is equal to the length of the received data packet, this means content of the current data packet is a complete message, directly parsing the message;
   a second processing unit used for, if the length of the first message is less than the length of a data packet, splitting the data packet, i.e. extracting complete messages from the data packet, and characterizing one complete message with a message head address and a message length;
   a third processing unit used for, if the length of the first message is greater than the length of a data packet, caching the data packet and further splicing several data packets together to finally obtain one complete message, and then calculating the length of the complete message and parsing the obtained complete message.

Optionally, the above-mentioned parsing module further includes:
a message filtering sub-module used for identifying message type according to the message code, judging whether the message is associated with log generation according to the identified type, and if the message is irrelevant to log generation, then directly discarding the message; otherwise processing various types of messages associated with log generation as below:
   for a version negotiation message, obtaining and caching a protocol version number in the message
   for a user authentication request message, extracting a user name from the message and caching the same;
   for a channel request message, obtaining and caching requested channel type;
   for a message transmitted in a channel, judging whether the message belongs to requests or responses by a message direction and caching the message direction; wherein if the message direction is from the client to the server, then the message is a request message, otherwise a response message;
   a log generating sub-module used for generating a parsed log based on the cached content and a response data packet, the parsed log including: TCP/IP tetrad, session ID, user name logging into the session, login time, request command of a client, request start time, response data returned from the serving end to the client, and response end time;
   wherein the request command of the client and the response data returned from the serving end to the client can occur repetitively in the life cycle of one session, and each parsed log generated only contains one request command of the client and one response of the server end, i.e. requests and responses of different parsed log are independent of each other;
   The TCP/IP tetrad, session ID, user name logging into the session, and login time remain unchanged in the life cycle of one session.

Further optionally, the above-mentioned log sending module further includes:
a packaging sub-module used for padding a log header when sending the log, the log header comprising: "log number", "segment or not", "segment number" and "last segment", wherein the "log number" is used for characterizing a unique log; "segment or not" is used for marking whether the current log is sent in segments or not, and if the mark is 0, this means the content is entire log content, otherwise the log is divided into several segments; "segment number" and "last segment" are meaningful only when "segment or not" is 1, wherein "segment number" is a unique identification of a log segment; and
a sending sub-module used for sending the packaged log to a storage server;
wherein the storage server, after receiving log segments, splices log segments having the same "log number" in increasing order by "segment number", thereby splicing a complete log.

### Example 2

In order to satisfy demand for business auditing of some enterprises or institutions, the present invention proposes an SSH protocol-based session parsing method.

A SSH protocol-based session parsing method provided by the present invention includes the following steps, and processed by the method are plaintext SSH data packets:
Every time an SSH data packet arrives, the data packet is submitted to a packet processing module. The data packet before being processed might contain one incomplete message, one complete message, or a plurality of messages; through splitting and splicing the data packet, the packet processing module generates a complete message for parsing by a parsing module.

Wherein the process of splitting the packet is actually a process of extracting a message from the packet, and one message is characterized using a message head address and a message length; the process of splicing the packet is implemented by caching the data packet, the data packet that has been reassembled is submitted to the packet processing module, and the sequence of messages can be guaranteed, which ensures the integrity of the spliced message and the correctness of message content.

The protocol parsing module identifies message type according to a message code, and different message types correspond to different stages of the SSH session. The parsing module identifies that the message is associated with log generation, and then parses the message header; if the message is irrelevant to log generation, then the parsing module discards the message directly.

Different parsing methods are applied to different types of messages. For a version negotiation message, the message is directly cached; for a user authentication request message, a user name is extracted from the message and cached; for a channel request message, channel type being requested is obtained, and it is ensured the channel is used for the SSH session; for a message transmitted in a channel, it is judged through message direction whether the message belongs to requests or responses, and if the message direction is C→S, then the message is a request message, and if the message direction is S→C, then the message is a response message. Messages of different types are parsed, related content is cached and a parsed log is generated.

The log generated by the method comprises information such as TCP/IP tetrad, session ID, user name logging into the session, login time, etc. In one session life cycle, the version negotiation and user authentication process occur only once. The TCP/IP tetrad, session ID, user name logging into the session, login time and other information maintained during parsing will not change in one session life cycle.

The generated log further comprises a request command of a client, request start time, response data returned from the serving end to the client, and response end time. Unlike the login information, the request of the client and the response of the serving end may occur repetitively in one session life cycle. The method limits each log contains and only contains one request and one response, so different logs of the same session share the TCP/IP tetrad, session ID, user name logging into the session, login time and other information, and requests and responses of different logs are independent of each other.

During parsing, a log is generated when being cached. Logs are transmitted using a streaming send mode. That is, when the length of the cached log reaches a sending length, the log is sent to a specified storage server, without a need to wait for the generation of a complete log to finish.

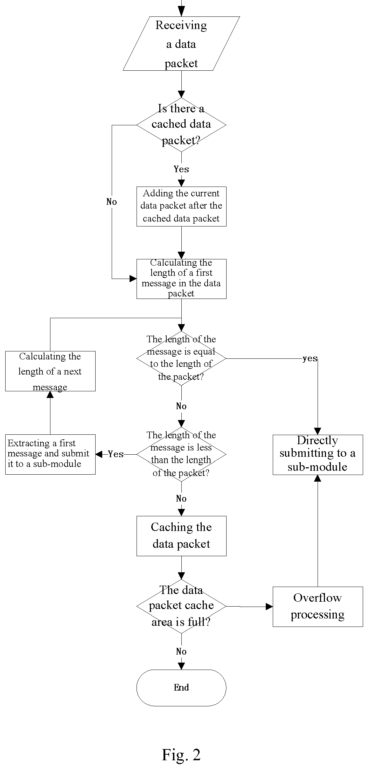

Fig. 2 is a processing flowchart of the packet processing module, wherein the following steps are comprised:
a) the packet processing module, after receiving a data packet, first checking whether there is a cached data packet in a cache area, and if there is no cached data packet, then directly calculating the length of a first message in the data packet; if there is a cached data packet, this means the current data packet is a continuation of content in the cached data packet, then after copying content of the current data packet to the cached data packet, splicing an incomplete message and calculating the length of a first message in the current cached data packet;
b) comparing the calculated length of the first message with the length of the data packet, and performing steps c), d) and e) according to a comparison result;
c) if the message length is equal to the data packet length, this means content of the current data packet is one complete message, then directly submitting the message to the parsing module for parsing;
d) if the message length is less than the data packet length, this means the current data packet contains more than one complete message, then extracting a first complete message from the data packet, submitting the message to the parsing module for parsing, and calculating the length of a first message in the remaining data packet, repeating step b);
e) if the message length is greater than the data packet length, this means content of the current data packet is only one portion of a message; since an incomplete message cannot be submitted to the parsing module, if the current data packet has not yet been cached, then caching the data packet; if the current data packet is already in the cache area , then moving content of the data packet to the header of the cache area, so as to make memory room for a subsequent to-be-cached data packet.

When parsing, a complete request inputted by a user needs to be recorded, and user input might be implemented with the aid of various shortcut keys or function keys. To restore the user's request, an echoed message returned from the serving end to the client needs to be identified and understood, and the key of understanding the echoed message lies in identifying escape characters in the echoed message.

**Table 1 is an escape character set in echoed messages of the method according to the present invention.**

| Operation | Character | Function |
|---|---|---|
| enter | 0d | move the cursor to ahead of line |
| shift left | 08 | shift the cursor leftward by one bit |
| shift right | 1b 5b 43 | shift the cursor rightward by one bit |
| delete to end of line | 1b 5b 4b | delete characters from the current cursor to end of line |
| insert character | 1b 5b Pn 40 | insert Pn null characters at the current cursor |
| delete character | 1b 5b Pn 50 | delete Pn null characters backward from the current cursor |

Every time the client inputs a request, the client will receive an echoed message from the serving end; besides characters inputted by the client, the echoed message further comprises escape characters. As shown in Table 1, by parsing escape characters, the cursor's position at any moment and the current request content can be located accurately, thereby achieving complete restoration of any request content.

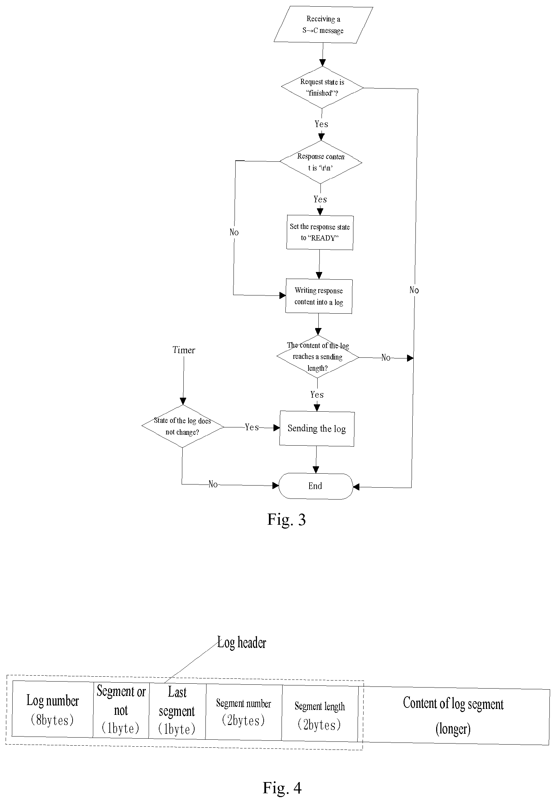

Fig. 3 is a response parsing flowchart, comprises steps as below:
1) the parsing module receiving a S→C message, and judging whether the request state is "finished" or not;
2) if the request state is "finished", this means the current message is a response message, all response messages beginning with '\r\n'; when receiving an '\r\n' message, setting the response state to "READY". The method processing responses is to directly all response message content to a cached log when the response state is "READY".
3) when writing response content to the log cache, judging the length of a current cached log, and if the length of the cached log reaches the log sending length, then sending the log immediately.
4) using the arrival of a next request as an identification of the end of a previous response, at this point regardless of the length of the cached log, adding a response end time and a log end mark to the tail of the cached log and sending the log immediately. If the next request does not arrive, then the last segment of the log generated by the previous parsing needs to be triggered by a timer for sending, the timer triggers the log sending module to monitor log state; if the log state does not change over a previous timing cycle, this means a complete log has been generated, and the current cached log segment should be sent immediately.

Since the log is transmitted using the streaming send mode, content sent each time is only a small segment of the complete log; to ensure the integrity and correctness of log content, a log header is added to each log segment. The format of the log header is as shown in the dotted box in Fig. 4, wherein "log number" is used for characterizing a unique log, "segment or not" is used for marking whether this paragraph of log content is sent in segments or not, if the mark is 0, this means the content is entire log content, otherwise the log is divided into several segments; "segment number" and "last segment" are meaningful only when "segment or not" is 1, wherein "segment number" is a unique identification of a log segment; the storage server, after receiving log segments, splices log segments having the same "log number" in increasing order by "segment number", thereby splicing a complete log.

The log obtained using the foregoing technical solution is as shown in Table 2.

**Table 2 is the log format customized using the method according to the present invention.**

| Data Content | Data Type | Number |
|---|---|---|
| source port | Ushort | 1 |
| destination port | Ushort | 2 |
| source IP | IPv4 | 3 |
| server IP | IPv4 | 4 |
| data ID | String | 5 |
| session ID | String | 6 |
| UUID | String | 7 |
| detailed data type | Ulong | 8 |
| server version | String | 9 |
| login time | Time | 10 |
| login name | String | 11 |
| start time of data operation | Time | 12 |
| operation command | String | 13 |
| return data | String | 14 |
| end time of data operation | Time | 15 |

To sum up, the present invention proposes a SSH protocol-based session parsing method, the method involving three modules: a packet processing module, a parsing module and a log sending module. (1) The packet processing module splits and splices an arriving data packet and obtains complete messages and submits them to the parsing module; (2) the parsing module distinguishes message types through message codes, extracts different content from different types of messages, processes extracted content and writes them into logs, each log containing and only containing one request and one response; (3) the log sending module is responsible for monitoring log state, and transmits logs using a streaming send mode, i.e. when the length of a locally cached log reaches the sending length, the log sending module immediately sends the log to a storage server instead of waiting for the log generation to finish, thereby saving the cache space. The technology of the present invention can realize SSH session-based auditing and provide safety guarantee for institutions such as banks.

Finally it should be explained that the aforementioned embodiments are merely used for illustrating rather than limiting the technical solution of the present invention. Although the present invention has been described in detail with reference to the embodiments, those skilled in the art will understand that modifications or equivalent substitutions can be made to the technical solutions of the present invention without departing from the spirit and scope of the technical solutions of the present invention, and thereby should all be encompassed within the scope of the claims of the present invention.

## Claims

1. A SSH protocol-based session parsing method, comprising:
step 101) receiving a SSH protocol-based session data packet and respectively preprocessing the received data packet as follows:
when one data packet contains several complete messages, extracting each complete message from the data packet;
when the data packet contains an incomplete message, firstly caching the incomplete message contained in the current data packet, then receiving a subsequent data packet, and finally splicing a message contained in the subsequent data packet with content of the cached message until a complete message is spliced;
step 102) extracting a content associated with log generation from each obtained complete message, packaging the content associated with the log according to a set format, and then obtaining a parsed log and finishing the session parsing.

2. The SSH protocol-based session parsing method according to Claim 1, **characterized by** further comprising, after step 102):
step 103) sending the generated parsed log to a log server in a streaming send mode;
wherein the streaming sending mode is: writing the generated parsed log into a log cache, and when a length of a cached log reaches a set sending length, immediately sending information on the parsed log to the log server.

3. The SSH protocol-based session parsing method according to Claim 1, **characterized in that** step 101) further comprises:
step 101-1) after receiving a SSH protocol-based session data packet, firstly checking whether there is a cached data packet in a cache area, and if there is no cached data packet, then directly calculating a length of a first message in the received data packet; if there is a cached data packet, this means the current data packet is a continuation of content contained in the cached data packet, then first copying content of the current data packet to the cached data packet, then splicing an incomplete message and calculating the length of a first message in the current cached data packet;
step 101-2) comparing the calculated length of the first message with the length of the received data packet, and respectively performing the following steps in view of different situations of a judgment result:
step 101-2-1) if the length of the first message is equal to the length of the received data packet, this means content of the current data packet is a complete message, then directly parsing the message;
step 101-2-2) if the length of the first message is less than the length of the data packet, then splitting the data packet, i.e. extracting complete messages from the data packet and characterizing a complete message with a message head address and a message length;
step 101-2-3) if the length of the first message is greater than the length of the data packet, then caching the data packet, further splicing several data packets, finally obtaining a complete message and parsing the obtained complete message.

4. The SSH protocol-based session parsing method according to Claim 1, **characterized in that** specifically, step 102) comprises:
step 102-1) identifying a message type according to message code, judging according to the identified type whether the message is associated with log generation, and if the message is irrelevant to log generation, then directly discarding the message; otherwise respectively processing various types of messages associated with log generation as follows:
for a version negotiation message, obtaining and caching a protocol version number in the message;
for a user authentication request message, extracting a user name from the message and caching the same;
for a channel request message, obtaining and caching a requested channel type;
for a message transmitted in a channel, judging from a message direction whether the message belongs to requests or responses, and caching the message direction; wherein if the message direction is from a client to a server, then the message is a request message, otherwise a response message;
step 102-2) generating a parsed log based on cached content and a response data packet, the generated log comprising: TCP/IP tetrad, session ID, user name logging into the session, login time, request command of the client, request start time, response data returned from a serving end to the client, and response end time;
wherein,
the request command of the client and the response data returned from the serving end to the client can occur repetitively in one session life cycle, and each parsed log as generated only contains one request command of the client and one response of the server end, i.e. requests and responses of different parsed logs are independent of each other;
the TCP/IP tetrad, session ID, user name logging into the session and login time remain unchanged in one session life cycle.

5. The SSH protocol-based session parsing method according to Claim 4, **characterized in that** each input of the client is sent to the server in the form of a message, and a result of input is presented at a terminal via an echoed message returned from the serving end; by identifying escape characters in the echoed message, the position of a cursor is accurately controlled, the request command is restored with reference to request characters carried in the message, and when detecting the client request ends, the restored request command is immediately written into the log cache.

6. A SSH protocol-based session parsing system, comprising:
a packet processing module used for receiving an SSH protocol-based session data packet and respectively preprocessing the received data packet as follows:
when one data packet contains several complete messages, extracting each complete message from the data packet;
when the data packet contains an incomplete message, firstly caching the incomplete message contained in the current data packet, then receiving a subsequent data packet, and finally splicing a message contained in the subsequent data packet with content of the cached message until a complete message is spliced;
a parsing module used for extracting a content associated with log generation from each obtained complete message, packaging the content associated with the log according to a set format, and then obtaining a parsed log and finishing the session parsing.

7. The SSH protocol-based session parsing system according to Claim 6, **characterized in that** the system further comprises:
a log sending module used for sending the generated parsed log to a log server in a streaming send mode; wherein the streaming send mode is: writing the generated parsed log into a log cache, and when a length of a cached log reaches a set sending length, immediately sending information on the parsed log to the log server.

8. The SSH protocol-based session parsing system according to Claim 7, **characterized in that** the packet processing module further comprises:
a first processing sub-module used for, after receiving a SSH protocol-based session data packet, firstly checking whether there is a cached data packet in a cache area, and if there is no cached data packet, then directly calculating a length of a first message in the received data packet; if there is a cached data packet, this means the current data packet is a continuation of content contained in the cached data packet, then first copying content of the current data packet to the cached data packet, then splicing an incomplete message and calculating the length of a first message in the current cached data packet;
a second processing sub-module used for comparing the calculated length of the first message with the length of the received data packet, and respectively starting the following units in view of different situations of a judgment result:
a first processing unit used for, if the length of the first message is equal to the length of the received data packet, this means content of the current data packet is a complete message, then directly parsing the message;
a second processing unit used for, if the length of the first message is less than the length of the data packet, then splitting the data packet, i.e. extracting complete messages from the data packet and characterizing a complete message with a message head address and a message length;
a third processing unit used for, if the length of the first message is greater than the length of the data packet, then caching the data packet, further splicing several data packets, finally obtaining a complete message and parsing the obtained complete message.

9. The SSH protocol-based session parsing system according to Claim 7, **characterized in that** the parsing module further comprises:
a message filtering sub-module used for identifying a message type according to message code, judging according to the identified type whether the message is associated with log generation, and if the message is irrelevant to log generation, then directly discarding the message; otherwise respectively processing various types of messages associated with log generation as follows:
for a version negotiation message, obtaining and caching a protocol version number in the message;
for a user authentication request message, extracting a user name from the message and caching the same;
for a channel request message, obtaining and caching a requested channel type;
for a message transmitted in a channel, judging from a message direction whether the message belongs to requests or responses, and caching the message direction; wherein if the message direction is from a client to a server, then the message is a request message, otherwise a response message;
a log generating sub-module used for generating a parsed log based on cached content and a response data packet, the generated log comprising: TCP/IP tetrad, session ID, user name logging into the session, login time, request command of the client, request start time, response data returned from a serving end to the client, and response end time;
wherein,
the request command of the client and the response data returned from the serving end to the client can occur repetitively in one session life cycle, and each parsed log as generated only contains one request command of the client and one response of the server end, i.e. requests and responses of different parsed logs are independent of each other;
the TCP/IP tetrad, session ID, user name logging into the session and login time remain unchanged in one session life cycle.

10. The SSH protocol-based session parsing system according to Claim 7, **characterized in that** the log sending module further comprises:
a packaging sub-module used for padding a log header while sending the log, the log header comprising: "log number", "segment or not", "segment number" and "last segment", wherein "log number" is for characterizing a unique log; "segment or not" is used for marking whether the current log is sent in segments, and if the mark is 0, this means content of this segment is content of an entire log, otherwise the log is divided into several segments; "segment number" and "last segment" are meaningful only when "segment or not" is 1, wherein "segment number" is a unique identification of a log segment; and
a sending sub-module used for sending the packaged log to a storage server;
wherein the storage server, after receiving log segments, splices log segments having the same "log number" in increasing order by "segment number", thereby splicing a complete log.
